# EUROPÄISCHE PATENTSCHRIFT

(11) **EP 2 691 636 B1**
(45) Veröffentlichungstag und Bekanntmachung des Hinweises auf die Patenterteilung: **08.07.2015**
(21) Anmeldenummer: 12716184.2
(22) Anmeldetag: 27.03.2012
(51) Int. Cl.: F03B 13/08, F03B 1/04, F03B 1/00, F03B 17/06, E02B 8/06, E02B 9/00

(54) **WEHRANLAGE**
WEIR PLANT
SYSTÈME DE BARRAGE

(30) Priorität: 31.03.2011 AT 4552011
(43) Veröffentlichungstag der Anmeldung: 05.02.2014
(73) Patentinhaber: Staudt, Friedrich, 4600 Thalheim bei Wels (AT)
(72) Erfinder: Staudt, Friedrich, 4600 Thalheim bei Wels (AT)
(74) Vertreter: Patentanwaltskanzlei Hübscher
(86) Internationale Anmeldenummer: PCT/AT2012/050040
(87) Internationale Veröffentlichungsnummer: WO 2012/129586

(56) Entgegenhaltungen:
- WO-A2-2010/000957
- AT-B- 404 866
- DE-A1- 3 637 083
- DE-A1- 3 735 841
- DE-A1-102007 022 860

## Beschreibung

### Technisches Gebiet

Die Erfindung bezieht sich auf eine Wehranlage mit einem Wehr und einer dem Wehr in Strömungsrichtung nachgeordneten, der Höhe nach verlagerbaren Radialturbine mit horizontaler Rotorachse.

### Stand der Technik

Um das Überlaufwasser von Wehranlagen energetisch zu nützen, ist es bekannt (DE 10 2008 037 528 A1), dem Wehr eine Schaufelradturbine mit horizontaler Rotorachse nachzuordnen, die von oben durch das überlaufende Wasser beaufschlagt wird, was den Vorteil mit sich bringt, dass bereits bestehende Anlagen zusätzlich für eine Energiegewinnung genützt werden können. Da der Wirkungsgrad einer Schaufelradturbine unter anderem von ihrer Beaufschlagungsrichtung abhängt, ist die Schaufelradturbine entsprechend gegenüber dem Aufschlagswasser auszurichten. Zu diesem Zweck kann die Schaufelradturbine sowohl der Höhe nach als auch in Strömungsrichtung verlagert werden, indem sie auf einem entlang des Ufers auf Schienen verfahrbaren Schlitten der Höhe nach verstellbar angeordnet wird. Damit ist zwar die erforderliche Anpassung der Turbinenlage an das jeweilige Restwasserangebot möglich, doch wird diese Anpassungsmöglichkeit mit einem hohen Konstruktionsaufwand erkauft, zumal zusätzlich der Schutz der Schaufelradturbine insbesondere vor Geschwemmsel, aber auch vor Geschiebe berücksichtigt werden muss.

Zur energetischen Ausnützung des Überlaufwassers von Schützenwehren ist es darüber hinaus bekannt (DE 36 37 083 A1), die Turbinen-Generatoreinheit mit in Strömungsrichtung verlaufender Achse in einem Strömungskanal vorzusehen, der eine Schützentafel durchsetzt, sodass die Höhenverstellung der Schützentafel zur verstärkten Wasserabströmung bei Hochwasser genützt werden kann. Für die Einhaltung des Gefälles zwischen Ober- und Unterwasser sind besondere Hebevorrichtungen für die Schützentafel erforderlich. Damit der mit solchen Hebevorrichtungen verbundene Aufwand vermieden werden kann, wurde schließlich vorgeschlagen (AT 404 866 B), den Strömungskanal mit der Turbinen-Generatoreinheit in einer mit der Schützentafel verbundenen, im Unterwasser schwimmenden Wanne vorzusehen, womit für eine automatische Steuerung der Höhenlage der Turbinen-Generatoreinheit und folglich für gleichbleibende Abströmverhältnisse gesorgt wird. Diese bekannten Wehranlagen setzen allerdings Propellerturbinen voraus, was dem Einsatz von Radialturbinen mit horizontaler Rotorachse entgegensteht.

### Darstellung der Erfindung

Der Erfindung liegt somit die Aufgabe zugrunde, bestehende Wehranlagen mit einem vergleichsweise geringen Konstruktionsaufwand zur Energiegewinnung mit einer Wasserkraftturbine ausrüstet zu können, die mit einem guten Wirkungsgrad das Überlaufwasser dieser Wehranlagen nützt und in einfacher Weise vor Geschwemmsel und Geschiebe geschützt werden kann.

Ausgehend von einer Wehranlage der eingangs geschilderten Art löst die Erfindung die gestellte Aufgabe dadurch, dass die über wenigstens eine untere Turbinenanspeisung beaufschlagbare, als Freistrahlturbine wirkende Radialturbine unterhalb einer Überlauframpe auf einer Schützentafel des Wehrs angeordnet ist und dass die Turbinenanspeisung eine gegen den Turbinenrotor gerichtete, düsenartige Leiteinrichtung umfasst.

Die Erfindung macht sich den Umstand zunutze, dass Wehre üblicherweise mit Schützentafeln ausgerüstet sind, die über ein Hubwerk der Höhe nach verlagert werden können, sodass sich bei einer Anordnung der jeweils zum Einsatz kommenden Radialturbine an einer solchen Schützentafel als Turbinenträger besondere bauliche Maßnahmen zur verstellbaren Lagerung der Radialturbine der Höhe nach erübrigen. Mit dem Vorsehen einer unteren Turbinenanspeisung zur Turbinenbeaufschlagung werden darüber hinaus wesentliche Voraussetzungen geschaffen, die Radialturbine vorteilhaft mit dem Restwasser nach Art einer Freistrahlturbine zu beaufschlagen, wenn die Turbinenanspeisung eine gegen den Turbinenrotor gerichtete, düsenartige Leiteinrichtung umfasst. Durch diese Maßnahme strömt das Aufschlagswasser gerichtet gegen die Turbinenschaufeln oberhalb des Unterwassers und kann auch wieder aus den Kammern zwischen den Schaufeln frei ausströmen, sodass die kinematische Energie des Aufschlagswassers vorteilhaft für den Antrieb des Turbinenrotors genützt werden kann. Dazu kommt, dass die Turbinenanordnung unterhalb einer Überlauframpe einen einfachen Schutz der Radialturbine gegenüber Geschwemmsel mit sich bringt. Da die Radialturbine an der Schützentafel gelagert ist, braucht auch die Geschiebegefahr konstruktiv nicht besonders berücksichtigt zu werden, weil ja die Radialturbine mit der Schützentafel hochgezogen wird.

Die unten gegen den Turbinenrotor oberhalb des Unterwassers gerichtete, düsenartige Leiteinrichtung kann im einfachsten Fall an einen Zulaufspalt zwischen einem Vorboden und der Schützentafel anschließen. Das Restwasser wird somit unterhalb der Schützentafel der Leiteinrichtung zur Beaufschlagung des Turbinenrotors zugeführt. Dies ist aber nicht zwingend, weil es auch möglich ist, das Restwasser mittels einer Überhebeeinrichtung über das Wehr hinweg dem Turbinenrotor zuzuführen. Von der Überhebeeinrichtung muss allerdings, beispielsweise über einen Fallschacht, eine Strömungsverbindung zur Leiteinrichtung zwischen der Schützentafel und der Radialturbine vorgesehen werden.

Mit Hilfe der Leiteinrichtung der Turbinenanspeisung kann vorteilhaft auf die jeweiligen Restwasserbedingungen Rücksicht genommen werden, beispielsweise dadurch, dass die Leiteinrichtung hinsichtlich des Durchströmquerschnitts eingestellt wird, womit auf die Durchflussmenge Einfluss genommen wird. Über die Leiteinrichtung kann aber auch die Beaufschlagungsrichtung des Turbinenrotors, also die Anströmrichtung der Turbinenschaufeln, bestimmt werden. Besonders einfache Konstruktionsverhältnisse ergeben sich in diesem Zusammenhang, wenn die Leiteinrichtung eine obere und eine untere je für sich in ihrer Neigung einstellbare Leitwand aufweist. Sind die beiden Leitwände in ihrem gegenseitigen Abstand einstellbar ausgeführt, so kann auch bezüglich des Durchströmquerschnitts eine einfache Anpassung an die jeweiligen Strömungsverhältnisse geschaffen werden.

Selbstverständlich kann auch die Radialturbine selbst an unterschiedliche Restwassermengen angepasst werden, indem die Turbinenschaufeln entsprechend einstellbar ausgeführt und beispielsweise über Einstellringe eingestellt werden.

Um die Lage der Radialturbine an alle Betriebsbedingungen vorteilhaft anpassen zu können und diesbezüglich keine starre Koppelung mit der Schützentafel in Kauf nehmen zu müssen, kann die Radialturbine zusätzlich auf der Schützentafel der Höhe nach verschiebbar gelagert sein.

### Kurze Beschreibung der Zeichnung

In der Zeichnung ist der Erfindungsgegenstand beispielsweise dargestellt. Es zeigen
- Fig. 1: ein erfindungsgemäße Wehranlage in einem schematischen Längsschnitt durch das Wehr und
- Fig. 2: eine der Fig. 1 entsprechende Darstellung einer Ausführungsvariante einer erfindungsgemäßen Wehranlage.

### Weg zur Ausführung der Erfindung

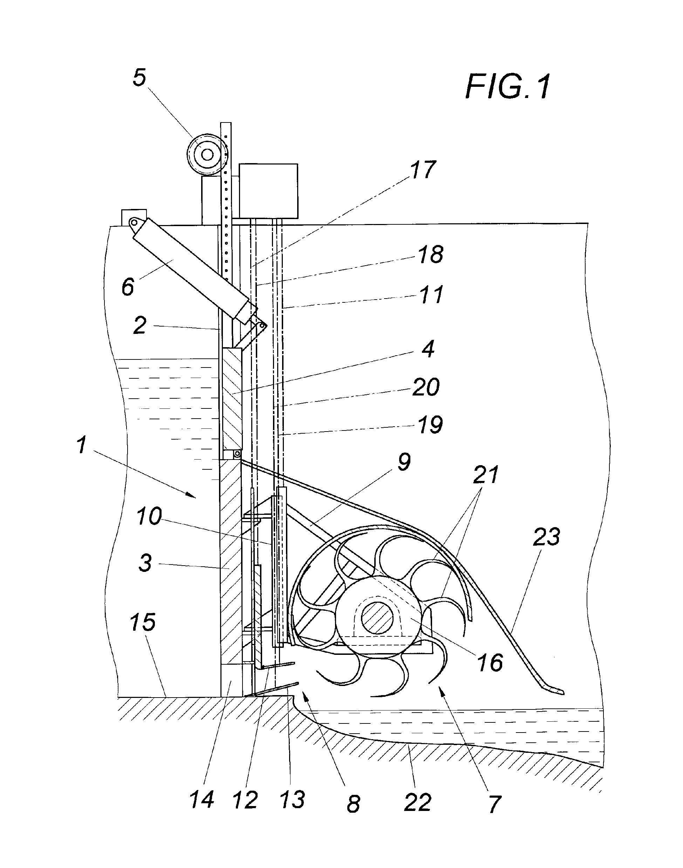

Die Wehranlage gemäß der Fig. 1 weist ein Wehr 1 auf, das eine in einer Vertikalführung 2 der Höhe nach geführte Schützentafel 3 mit einer oberen Stauklappe 4 aufweist. Die Schützentafel 3 ist mit Hilfe eines Hubwerks 5 entlang der Führung 2 verlagerbar. Für die Stauklappe 4, die am oberen Rand der Schützentafel 3 angelenkt ist, ist ein Schwenktrieb 6 in Form wenigstens eines Schwenkzylinders 6 vorgesehen. Auf der Seite des Unterwassers ist an der Schützentafel 3 eine Radialturbine 7 angeordnet, die mit dem sonst einen Überlauf bildenden Restwasser über eine Turbinenanspeisung 8 von unten nach Art einer Freistrahlturbine beaufschlagt wird. Diese Radialturbine 7 ist auf einem Schlitten 9 gelagert, der auf der Schützentafel 3 der Höhe nach verstellbar gelagert ist. Die Schlittenführung ist mit 10 bezeichnet. Der Schlittenantrieb 11 ist lediglich schematisch angedeutet, weil hierfür dem Fachmann geläufige, unterschiedliche Konstruktionen eingesetzt werden können.

Die Turbinenanspeisung 8 umfasst eine düsenartige Leiteinrichtung, die vorzugsweise eine obere und eine untere Leitwand 12, 13 aufweist. Diese Leiteinrichtung schließt an einem Zulaufspalt 14 zwischen einem Vorboden 15 und der entsprechend angehobenen Schützentafel 3 an, sodass das sonst einen Überlauf bildende Restwasser unterhalb der Schützentafel zur oberhalb des Unterwassers angeordneten Radialturbine 7 strömt. Zur Einstellung der Durchlaufmenge sowie der Düsenausrichtung gegenüber dem Turbinenrotor 16 sind die Leitwände 12, 13 jeweils der Höhe nach über strichpunktiert angedeutete Stelltriebe 17 und 18 sowie in ihrer Neigung über Stelltriebe 19 und 20 einstellbar.

Der Turbinenrotor 16 der von unten beaufschlagbaren Radialturbine 7 ist mit Turbinenschaufeln 21 ausgerüstet, die eine Umlenkung des Aufschlagwassers nach Art einer Freistrahlturbine und damit eine vorteilhafte Übertragung der kinetischen Energie des Aufschlagwassers auf den Turbinenrotor 16 erlauben. Diese Schaufelausbildung bedarf allerdings einer entsprechend gerichteten Beaufschlagung über die Leiteinrichtung, was durch die Einstellbarkeit der Leitwände 12 und 13 sichergestellt wird. Da das von den Turbinenschaufeln 21 abströmende Aufschlagswasser einen entsprechenden Strömungsquerschnitt erfordert, ist der Turbinenrotor 16 mit einem angepassten Mindestabstand vom Nachboden 22 oberhalb des Unterwassers anzuordnen. Die zusätzliche Höhenverstellung der Radialturbine 7 gegenüber der Schützentafel 3 über den Schlitten 9 ermöglicht eine feinfühlige Anpassung.

Die Radialturbine 7 ist unterhalb einer Überlauframpe 23 angeordnet, sodass selbst beim Abschwenken der Stauklappe 4 das aus dem Stauraum abfließende Geschwemmsel die Radialturbine 7 nicht gefährden kann. Da die Radialturbine 7 mit der Schützentafel 3 hochgezogen wird, kann auch das Geschiebe keine Gefahr für die Radialturbine 7 darstellen. Es ist lediglich dafür zu sorgen, dass insbesondere die untere Leitwand 13 mit der Schützentafel 3 entsprechend angehoben und aus dem Geschiebebereich verlagert wird.

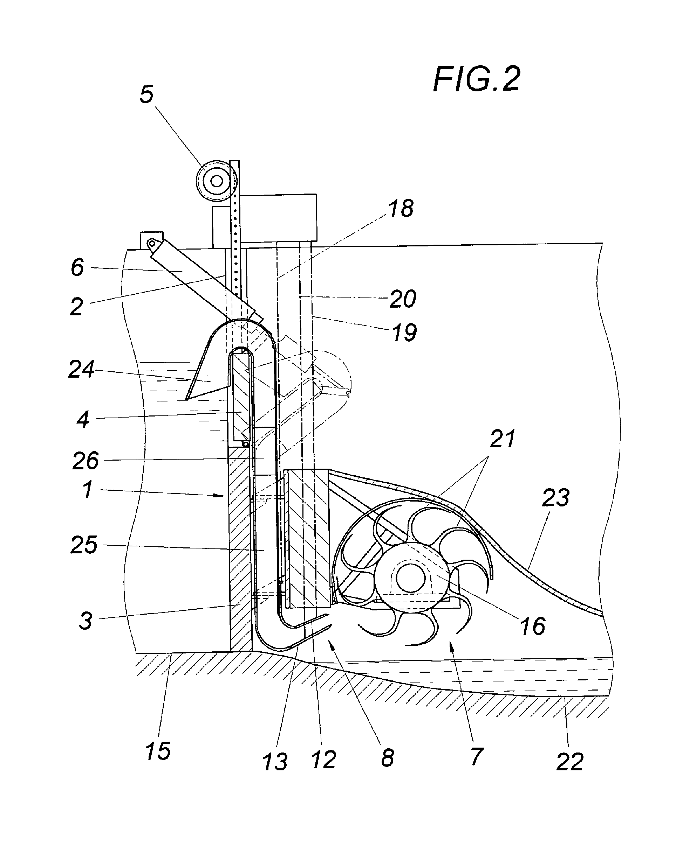

Die Ausführungsform der Wehranlage nach der Fig. 2 unterscheidet sich von der nach der Fig. 1 vor allem dadurch, dass das Restwasser nicht unter der Schützentafel, sondern mit Hilfe einer Überhebeeinrichtung 24 über das Wehr 1 hinweg der Turbinenanspeisung 8 zur Beaufschlagung der Radialturbine 7 zugeführt wird. Diese Überhebeeinrichtung 24 ist mit einem Fallschacht 25 an die Turbinenanspeisung 8 angeschlossen, die wiederum eine Leiteinrichtung aus einer oberen und einer unteren Leitwand 12, 13 umfasst. Zur Einstellung dieser düsenartigen Leiteinrichtung sind analog zum Ausführungsbeispiel nach der Fig. 1 Stelltriebe 19, 20 für die Neigungseinstellung der Leitwände 12, 13 vorgesehen. Zur Einflussnahme auf die Durchströmmenge ist der gegenseitige Abstand der Leitwände 12, 13 einstellbar. Zu diesem Zweck braucht lediglich die obere Leitwand 12 durch einen Stelltrieb 18 der Höhe nach verstellt zu werden.

Zum Füllen der Überhebeeinrichtung 24 kann in herkömmlicher Weise eine Pumpe eingesetzt werden. Eine andere Möglichkeit besteht darin, die Überhebeeinrichtung zu verschwenken, die zu diesem Zweck über einen biegeelastischen Einsatz 26 an den Fallschacht 25 angeschlossen ist, sodass beim Verschwenken der Stauklappe 4 und damit der mit der Stauklappe 4 verbundenen Überhebeeinrichtung 24 Oberwasser in die Überhebeeinrichtung 24 strömt.

Die Funktion der Radialturbine 7 bleibt im Vergleich zu der Ausführungsform nach Fig. 1 gleich. Es muss lediglich für einen ausreichenden Abstand der Radialturbine 7 von der Schützentafel 3 gesorgt werden, um Platz für den Fallschacht 25 zur Zuleitung des Restwassers zur Turbinenbeaufschlagung zu schaffen.

## Patentansprüche

1. Wehranlage mit einem Wehr (1) und einer dem Wehr (1) in Strömungsrichtung nachgeordneten, der Höhe nach verlagerbaren Radialturbine (7) mit horizontaler Rotorachse, **dadurch gekennzeichnet, dass** die über wenigstens eine untere Turbinenanspeisung (8) beaufschlagbare, als Freistrahlturbine wirkende Radialturbine (7) unterhalb einer Überlauframpe (23) auf einer Schützentafel (3) des Wehrs (1) angeordnet ist und dass die Turbinenanspeisung (8) eine gegen den Turbinenrotor (16) gerichtete, düsenartige Leiteinrichtung umfasst.

2. Wehranlage nach Anspruch 1, **dadurch gekennzeichnet, dass** die Leiteinrichtung an einen Zulaufspalt (14) zwischen einem Vorboden (15) und der Schützentafel (3) anschließt.

3. Wehranlage nach Anspruch 1, **dadurch gekennzeichnet, dass** die Leiteinrichtung an eine Überhebeeinrichtung (24) für das Wehr (1) angeschlossen ist.

4. Wehranlage nach einem der Ansprüche 1 bis 3, **dadurch gekennzeichnet, dass** die Leiteinrichtung hinsichtlich des Durchströmquerschnitts einstellbar ist.

5. Wehranlage nach einem der Ansprüche 1 bis 4, **dadurch gekennzeichnet, dass** die Leiteinrichtung hinsichtlich der Beaufschlagungsrichtung des Turbinenrotors (16) einstellbar ist.

6. Wehranlage nach einem der Ansprüche 1 bis 5, **dadurch gekennzeichnet, dass** die Leiteinrichtung eine obere und eine untere je für sich in ihrer Neigung einstellbare Leitwand (12, 13) aufweist.

7. Wehranlage nach Anspruch 6, **dadurch gekennzeichnet, dass** die beiden Leitwände (12, 13) in ihrem gegenseitigen Abstand einstellbar sind.

8. Wehranlage nach einem der Ansprüche 1 bis 7, **dadurch gekennzeichnet, dass** die Radialturbine (7) auf der Schützentafel (3) der Höhe nach verschiebbar gelagert ist.

## Claims

1. Weir installation comprising a weir (1) and a radial turbine (7) which is arranged downstream of the weir (1) in the flow direction and can be moved vertically and has a horizontal rotor axis, **characterised in that** the radial turbine (7) which can be acted upon by means of at least one lower turbine feed (8) and acts as an impulse turbine is arranged below an overflow ramp (23) on a sluice (3) of the weir (1), and that the turbine feed (8) comprises a nozzle-like guide device which is directed towards the turbine rotor (16).

2. Weir installation as claimed in claim 1, **characterised in that** the guide device adjoins an inlet gap (14) between an upstream weir floor (15) and the sluice (3).

3. Weir installation as claimed in claim 1, **characterised in that** the guide device is connected to a pass-over device (24) for the weir (1).

4. Weir installation as claimed in any one of claims 1 to 3, **characterised in that** the guide device is adjustable in terms of the through-flow cross-section.

5. Weir installation as claimed in any one of claims 1 to 4, **characterised in that** the guide device is adjustable in terms of the direction in which the turbine rotor (16) is acted upon.

6. Weir installation as claimed in any one of claims 1 to 5, **characterised in that** the guide device comprises an upper and a lower guide wall (12, 13) which are each adjustable in the their own right in terms of their inclination.

7. Weir installation as claimed in claim 6, **characterised in that** the two guide walls (12, 13) are adjustable in terms of their mutual spaced interval.

8. Weir installation as claimed in any one of claims 1 to 7, **characterised in that** the radial turbine (7) is mounted so as to be vertically displaceable on the sluice (3).

## Revendications

1. Système de barrage avec un barrage (1) et une turbine radiale (7) réglable en hauteur, à axe de rotor horizontal, disposée en aval du barrage (1) dans le sens d'écoulement, **caractérisé en ce que** la turbine radiale (7) pouvant être actionnée au moyen d'au moins une alimentation de turbine (8) inférieure, agissant en tant que turbine à jet libre, est disposée sous une rampe déversoir (23) sur un panneau à vannes (3) du barrage (1), et **en ce que** l'alimentation de turbine (8) comprend un dispositif de guidage en forme de buse, dirigé contre le rotor de turbine (16).

2. Système de barrage selon la revendication 1, **caractérisé en ce que** le dispositif de guidage est relié au niveau d'une fente d'alimentation (14) entre un fond (15) et le panneau à vannes (3).

3. Système de barrage selon la revendication 1, **caractérisé en ce que** le dispositif de guidage est relié à un dispositif « col de cygne » (24) pour le barrage (1).

4. Système de barrage selon l'une des revendications 1 à 3, **caractérisé en ce que** le dispositif de guidage peut être ajusté en ce qui concerne la section transversale d'écoulement.

5. Système de barrage selon l'une des revendications 1 à 4, **caractérisé en ce que** le dispositif de guidage peut être ajusté en ce qui concerne le sens de sollicitation du rotor de turbine (16).

6. Système de barrage selon l'une des revendications 1 à 5, **caractérisé en ce que** le dispositif de guidage présente une paroi de guidage (12, 13) inférieure et supérieure, chacune pouvant se régler dans son inclinaison.

7. Système de barrage selon la revendication 6, **caractérisé en ce que** les deux parois de guidage (12, 13) peuvent être réglées dans leur espacement mutuel.

8. Système de barrage selon l'une des revendications 1 à 7, **caractérisé en ce que** la turbine radiale (7) est montée déplaçable en hauteur sur le panneau à vannes (3).
